(19) Europäisches Patentamt
European Patent Office
Office européen des brevets

(11) Veröffentlichungsnummer : **0 057 375**
**B1**

(12) # EUROPÄISCHE PATENTSCHRIFT

(45) Veröffentlichungstag der Patentschrift : **24.04.85**

(51) Int. Cl.[4] : **C 09 B 5/36**, C 09 B 1/467

(21) Anmeldenummer : **82100367.0**

(22) Anmeldetag : **20.01.82**

(54) **Küpenfarbstoffe der Trisanthrachinonylaminotriazin-Reihe sowie deren Herstellung.**

(30) Priorität : **31.01.81 DE 3103258**

(43) Veröffentlichungstag der Anmeldung : **11.08.82 Patentblatt 82/32**

(45) Bekanntmachung des Hinweises auf die Patenterteilung : **24.04.85 Patentblatt 85/17**

(84) Benannte Vertragsstaaten : **CH DE FR GB IT LI**

(56) Entgegenhaltungen :
**CH-A- 104 012**
**CH-A- 348 547**
**DE-A- 390 201**
**DE-A- 590 163**
**"The chemistry of synthetic dyes", by K. Venkataraman**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hohmann, Walter, Dr.**
**Fontanestrasse 17**
**D-5090 Leverkusen (DE)**
Erfinder : **Wunderlich, Klaus, Dr.**
**Carl-Rumpff-Strasse 21**
**D-5090 Leverkusen (DE)**

**EP 0 057 375 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Küpenfarbstoffe der Formel

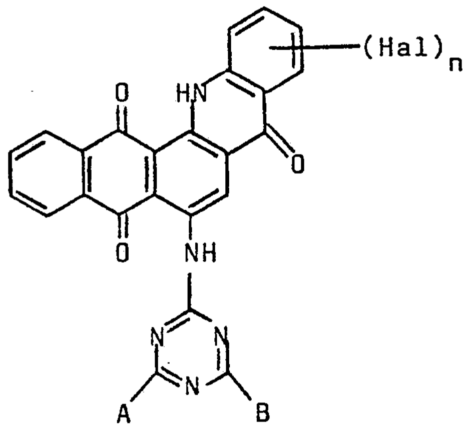

(I)

worin

A für —NHV, —NHW oder —NHZ und
B für —NHW oder —NHZ stehen, wobei
V einen Rest der Formel

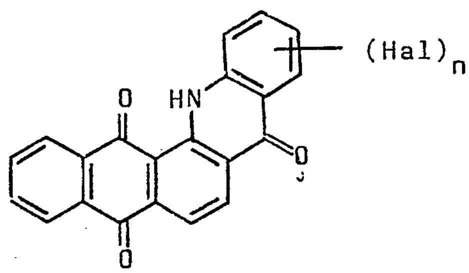

W einen Rest der Formel

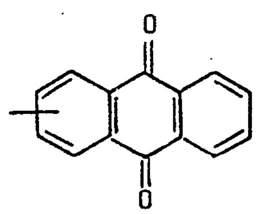

und

Z einen Rest der Formel

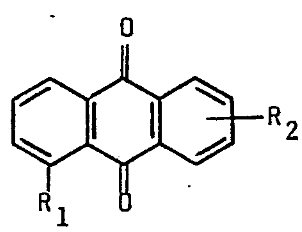

darstellen,

$R_1$ und $R_2$ Wasserstoff oder Acylamino, jedoch nicht gleichzeitig Acylamino,
Hal ein Halogenatom und
n die Zahlen 0, 1 oder 2 bedeuten.

Gegenstand der Erfindung sind weiterhin Küpenfarbstoffe enthaltend als Farbstoffkomponente mindestens 80, vorzugsweise mindestens 90 Gew.-% einer oder mehrerer Verbindungen der Formel (I).

Die Farbstoffkomponenten der Formel I können nach verschiedenen Verfahren hergestellt werden.

Ein Verfahren ist dadurch gekennzeichnet, daß man 1 Äquivalent Cyanurchlorid mit mindestens 1 Äquivalent eines Amins der Formel $NH_2$-V und maximal 2 Äquivalenten der Amine $NH_2$-W und/oder $NH_2$-Z

in beliebiger Reihenfolge nach an sich bekannten Methoden bis zum praktisch vollständigen Chloraustausch umsetzt.

Eine Variante für die Einführung des Restes Z besteht darin, ein Diamino-anthrachinon mit Cyanurchlorid, einem Di- oder Monochlortriazin so umzusetzen, daß nur eine Aminogruppe in Reaktion tritt und dann die nicht umgesetzte Aminogruppe nach an sich bekannten Verfahren zu acylieren.

Bei stufenweiser Verfahrensdurchführung erfolgt in erster Stufe vorzugsweise die Umsetzung mit dem Amin, welches das geringste Mol-Gewicht aufweist.

Der Austausch der ersten beiden Chloratome kann in üblichen unter den Reaktionsbedingungen inerten Lösungsmitteln durchgeführt werden.

Geeignete indifferente Lösungsmittel zur Durchführung der ersten Stufe sind Nitrobenzol, Chlorbenzol, Dichlorbenzol, Naphthalin und ähnliche Verbindungen.

Die Reaktionstemperaturen für den Austausch eines Chloratoms des Cyanurchlorids liegen zwischen 100 und 150 °C, vorzugsweise 130 und 140 °C. Zur Herstellung von Diaminotriazinen werden höhere Temperaturen benötigt : 160-210 °C, vorzugsweise 180-200 °C. Für den kompletten Chloraustausch muß in Gegenwart von aromatischen Oxyverbindungen gearbeitet werden (vgl. DE-PS 590 163).

Geeignete Oxyverbindungen zum vollständigen Chloraustausch sind Phenol, Chlorphenole, Kresole, Naphthole usw. Bevorzugt ist das normale Phenol.

Die Umsetzung in diesen Phenolen erfolgt bei 110-150 °C, vorzugsweise bei 120-145 °C. Die eingesetzten Phenolmengen betragen vorzugsweise das 10 bis 30-fache der für die Farbstoffe benötigten Cyanurchloridmenge.

Besonders vorteilhaft ist es, die Farbstoffkomponenten (I) im « Eintopf-Verfahren » herzustellen.

Dabei arbeitet man von vornherein in einem Phenol als Reaktionsmedium, wobei mit einem Amino-anthrachinon zunächst auf Temperaturen von 70-100 °C, vorzugsweise 80-100 °C zur Erzielung eines Mono- bzw. Dichloraustausches erwärmt und erst danach nach Zusatz eines und/oder zweier anderer Amino-anthrachinone die Temperaturen auf 120-150 °C erhöht werden bis der vollständige Halogenaustausch eingetreten ist.

Der Fortgang der Reaktion wird dabei in üblicher Weise analytisch verfolgt.

Sobald auf diese Weise im kleinen Maßstab das Temperatur/Zeit-Raster ermittelt worden ist, können die ermittelten Bedingungen unmittelbar auf die technischen Großproduktionen übertragen werden. Zur « Schönung » der Reaktionsprodukte können diese schließlich einer üblichen oxydativen Nachbehandlung unterworfen werden.

Unter den erfindungsgemäßen Reaktionsbedingungen werden überraschenderweise Produkte mit sehr geringen « Restchlor »-Werten (d. h. weniger als 0,8 %, vorzugsweise weniger als 0,4 %) erhalten.

Führt man dagegen die letzte Stufe des Halogenaustauschs unterhalb 120 °C durch, so steigt der « Restchlor »-Gehalt deutlich an, wobei Produkte minderer Qualität, insbesondere unbefriedigender Naßechtheiten, erhalten werden.

Andererseits ist auch eine Erwärmung in Gegenwart von Phenolen auf Temperaturen oberhalb 150 °C zu vermeiden, weil in diesem Temperaturbereich bereits ein partieller bis vollständiger Chlor-/Phenoxy-Austausch stattfindet.

Da unter den erfindungsgemäßen Bedingungen vollständiger Chlor-/Amin-Austausch ohne Anwendung eines Aminüberschusses möglich ist können die Farbstoffe ohne zusätzliche Reinigungsoperationen in optimalen färberischen Qualitäten erhalten werden. Es genügt, die eingesetzten Lösungsmittel, beispielsweise durch Wasserdampf- oder Vakuumdestillation zu entfernen, um die Farbstoffe in ausreichender Reinheit und praktisch quantitativer Ausbeute zu erhalten. Das ist überraschend, da es z. B. unter den erfindungsgemäßen Reaktionsbedingungen nicht möglich ist, die Chloratome des Cyanurchlorids auch nur annähernd vollständig allein gegen 1-Amino-5-benzoylaminoanthrachinon auszutauschen.

Die erfindungsgemäßen Küpenfarbstoffe färben Cellulosefasern, insbesondere Baumwolle, aus der Küpe nach allen üblichen Färbeverfahren in sehr kräftigen, klaren Tönen verschiedenster Nuance.

Gegenüber den nächstvergleichbaren, aus der DE-PS 590 163 bekannten Farbstoffen zeichnen sich die Verbindungen der Formel I durch ein besseres Echtheitsniveau aus.

Darüber hinaus entwickeln die neuen Farbstoffkomponenten der Formel I im Gegensatz zu den bekannten Farbstoffen der Beispiele 1-6 der genannten Patentschrift optimale Farbstärke beim Färben aus warmer Flotte. Sie sind daher auch unbeschränkt in moderne Kontinue-Färbeverfahren einsetzbar.

Im Vergleich zu den aus der DE-PS 390 201 bekannten Küpenfarbstoffen, die zum Teil aus den gleichen Ausgangsmaterialien, jedoch unter Anwendung anderer Reaktionsbedingungen hergestellt wurden, weisen die erfindungsgemäßen Farbstoffe wesentlich geringere « Restchlor-Werte » und damit eine deutlich verbesserte Alkalibeständigkeit auf. Sie besitzen oft bessere Farbstärken und klarere Nuancen.

Während nach der DE-AS 1 073 130 nur die unsymmetrischen reinen Farbstoffe gute Eigenschaften besitzen und Farbstoffgemische infolge des sehr unterschiedlichen färberischen Verhaltens ihrer Komponenten zahlreiche Nachteile besitzen, zeigen die erfindungsgemäßen Farbstoffgemische diese Nachteile nicht, da in ihnen mindestens ein 3.4-Phthaloylacridonylaminorest vorhanden ist. Dank der Trifunktionalität des Cyanurchlorids und der wesentlich besseren Selektivität des Chloraustausches gegen einen Amino-anthrachinonrest (im Vergleich zu den in der DE-AS 1 073 130 eingesetzten

Dichlortriazinen) kann man nach dem Zweistufen-Temperaturverfahren leicht solche Farbstoffmischungen herstellen, in denen alle Farbstoffmoleküle der Mischung wenigstens einen 3.4-Phthaloylacridonylaminorest enthalten.

Dadurch ist im Gegensatz zu den in der DE-AS 1 073 130 verwendeten Ausgangsstoffen die Farbstoffherstellung im Eintopfverfahren mit praktisch theoretischer Ausbeute möglich. Während dort nur ein molares Verhältnis 1 : 1 für die Amine möglich ist, kann es hier z. B. bei einer Zweier-Aminmischung im Verhältnis 1 : 2-2 : 1 variiert werden, wodurch mit gleichen Aminen sehr verschiedene Farbnuancen erzielt werden können.

Technisch und wirtschaftlich bedeutsamer als die reinen Farbstoffkomponenten sind Gemische der Verbindungen der Formel I insbesondere solche, wie man sie bei der Kondensation von Cyanurchlorid mit insgesamt 3 Mol (vorzugsweise aber einem bis zu etwa 10 %igen Unterschuß) eines Gemisches der Amine $V\text{-}NH_2$, $W\text{-}NH_2$ und $Z\text{-}NH_2$ in Gegenwart von aromatischen Oxyverbindungen bei 90-150 °C erhält, wobei dafür Sorge zu tragen ist, daß mindestens 1 Mol Amin $V\text{-}NH_2$ eingesetzt wird.

Solche Farbstoffgemische entsprechen etwa der folgenden Formel

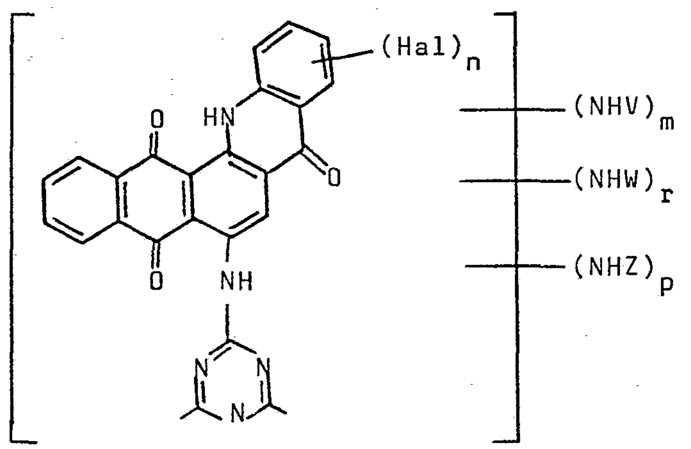

(II)

worin die diversen Reste die obengenannte Bedeutung haben und

m für eine Zahl von 0 bis 0,5 und

r und p unabhängig voneinander für eine Zahl von 0,5 bis 1,5 stehen,

wobei die Summe $m + r + p = 2$ ist.

Besonders bevorzugt sind Gemische der Formel II, worin $p = 0$, $m = 0$ bis 0,2 und $r = 1{,}8\text{-}2{,}0$ sind, wobei die Summe $m + r = 2$ ist.

Innerhalb der Formeln I und II sind wiederum solche Verbindungen bevorzugt, wobei $n = 0$ oder 1, « Hal » = Brom und « Acylamino » $C_1$-$C_4$-Alkylcarbonylamino oder vorzugsweise Benzoylamino, das gegebenenfalls durch Cl, Br, $C_1$-$C_4$-Alkyl, $OCH_3$, $CF_3$ oder $NO_2$ substituiert ist, bedeuten. In Z steht der Acylaminrest vorzugsweise für $R_1$.

Besonders wirtschaftlich ist es, anstelle der reinen Amine der Formel $W\text{-}NH_2$ deren technische Gemische einzusetzen. Dabei handelt es sich vor allem um solche Produkte, die bei der fabrikmäßigen Herstellung von 1-Nitroanthrachinon durch Nitrierung von Anthrachinon als Rohprodukt und anschließende Reduktion anfallen.

Besonders überraschend ist, daß selbst die nitroanthrachinonhaltigen Mutterlaugen und sonstigen Abfallprodukte der großtechnischen Reinigung von 1-Nitroanthrachinon mit gutem Erfolg als Ausgangsbasis zur Herstellung der Amine verwendet werden können.

Solche Abfallprodukte haben etwa folgende Zusammensetzung :

| | | |
|---|---|---|
| 1-Nitroanthrachinon : | < 60 %, vorzugsweise < 45 % | |
| 2-Nitroanthrachinon : | < 40 %, vorzugsweise < 30 % | |
| 1,5-Dinitroanthrachinon : | | in Summe mindestens 30 % |
| 1,8-Dinitroanthrachinon : | | |
| 1,6-Dinitroanthrachinon : | | |
| 1,7-Dinitroanthrachinon : | | |
| unsubst. Anthrachinon : | | |
| Sonstige : | | |

Durch Reduktion mit üblichen Mitteln erhält man daraus Amingemische entsprechender Zusammensetzung, die anstelle der reinen Amine $W\text{-}NH_2$ mit gutem Erfolg zur Herstellung von Trisaminotriazinen des beanspruchten Types verwendet werden können.

Dabei werden Küpenfarbstoffe erhalten, deren Nuancen in erstaunlichem Maße reproduzierbar sind

und deren Qualität oftmals die unter Verwendung von reinen Ausgangsmaterialien hergestellten Farbstoffe annähernd erreicht bzw. bisweilen sogar übertrifft. Dieses gilt insbesondere für die Farbstärke.

Steht in den Formeln I und II $R_1$ für H und $R_2$ für Acylaminreste so ist es unter Umständen vorteilhaft anstelle von reinen Amino-benzoylamino-anthrachinonen deren technische Gemische zu verwenden. Man kann sie z. B. auf an sich bekannten Wegen durch Reduktion und nachfolgende partielle Acylierung aus Dinitroanthrachinongemischen erhalten wie sie bei der fabrikmäßigen Herstellung von Dinitroanthrachinon durch Dinitrierung von Anthrachinon als Rohprodukt oder bei der anschließenden Reindarstellung von 1,5 und/oder 1,8-Dinitro-anthrachinone z. B. nach den Verfahrensweisen der DE-OS 2 637 732 und 2 637 733 durch Isolierung aus den Mutterlaugen erhalten werden können.

Man kann auch die Diamino-anthrachinongemische selbst so mit Cyanurchlorid oder dessen noch Chlor enthaltenden Derivaten umsetzen, daß nur eine Aminogruppe reagiert und anschließend die nicht reagierte Aminogruppe mit üblichen Acylierungsmitteln nach an sich bekannten Methoden acylieren.

Die in den nachfolgenden Beispielen gemachten Temperaturangaben beziehen sich auf Celsiusgrade.

Beispiel 1

75,8 g 1-Amino-anthrachinon (= 0,34 Mol) werden in 690 ml Phenol bei 60° mit 37 g Cyanurchlorid (0,2 Mol) versetzt. Die Mischung wird während 1 Stunde auf 70-75° erwärmt und anschließend 2 Stunden bei 90-95° gerührt. Chromatographisch ist dann kein 1-Aminoanthrachinon und kein Cyanurchlorid mehr nachweisbar. Eine entnommene Probe enthält 8,8 % Chlor.

Nun gibt man 89,9 g 2-Amino-3,4-phthaloyl-7-bromacridon (0,215 Mol) zu, erwärmt in 1 Stunde auf 140° und rührt weitere 3 Stunden bei gleicher Temperatur nach. In einer entnommenen Probe ist nur noch wenig 2-Amino-3,4-phthaloyl-7-brom-acridon nachweisbar. Man setzt 750 ml Wasser zu, destilliert mit Wasserdampf alles Phenol ab, saugt die Farbstoffsuspension ab, wächst mit heißem Wasser und trocknet. Ausbeute : 183 g.

Dieser Farbstoff — durch übliche Formierungen in feinste Verteilung gebracht — färbt Baumwolle nach allen Methoden echt in einem kräftigem olivgrünen Ton. In einer Versuchsserie ist die Reproduzierbarkeit von Nuance und Farbstärke sehr gut.

Beispiel 2

a) 98 g 7-Brom-3,4-phthaloyl-2-amino-acridon (0,24 Mol) werden in 1 400 ml trockenem Nitrobenzol mit 48 g Cyanurchlorid (0,26 Mol) bei 110° versetzt und 2 Stunden bei 130° verrührt. Man verdünnt mit 1 460 ml Methanol, rührt einige Zeit bei 50-60° nach, saugt ab, wäscht mit Methanol und trocknet. Erhalten werden 125 g. Dieses Produkt enthält 12,5 % Chlor und 14,1 % Brom.

b) 19,5 g dieses Produktes werden in 320 ml Phenol mit 14,5 g 2-Amino-anthrachinon bei 110° versetzt und 5 Stunden auf 150° erwärmt. Man verdünnt mit 320 ml Methanol, saugt bei 50° ab, wäscht mit Methanol und trocknet. Erhalten werden 28,2 g eines Produktes, das Baumwolle in olivgrünen Tönen färbt, und deutlich weniger gelbstichig ist als das nach Beispiel 1 erhaltene Produkt. Cl-Gehalt : 0,3 %, Bromgehalt : 9,0 %.

Beispiel 3

Man arbeitet wie in Beispiel 1 beschrieben, setzt aber statt 89,9 g 2-Amino-3,4-phthaloyl-7-bromacridon 73 g 2-Amino-3,4-phthaloylacridon ein. Erhalten werden 167 g Farbstoff, der Baumwolle nach allen Färbemethoden in olivgrünen Tönen echt anfärbt.

Beispiel 4

a) 22,3 g 1-Amino-anthrachinon (98 %ig) = 0,1 Mol werden in 250 ml trockenem Nitrobenzol bei 50-60° und 18,5 g = 0,1 Mol Cyanurchlorid versetzt. Man erwärmt in 30 Minuten auf 130° und hält bei dieser Temperatur bis chromatographisch kein Amin mehr nachweisbar ist (ca. 20-30 Minuten erforderlich), rührt kalt, saugt ab, wäscht mit wenig kaltem Nitrobenzol, mit reichlich Aceton und trocknet bei 60°. Erhalten werden 36 g = 97 % der Theorie an 2-Anthrachinonylamino(1)-4,6-dichlor-triazin. Cl-Gehalt : 19,0 %.

b) 18,6 g des nach a) erhaltenen Produktes werden in 350 ml Nitrobenzol mit 21 g 2-Amino-3,4-phthaloyl-7-brom-acridon versetzt und solange auf 190-195° erhitzt bis in einer entnommenen Probe nur noch eine Spur an Amin nachweisbar ist (ca. 2 Stunden erforderlich). Man verdünnt mit 350 ml Ethanol, saugt siedend heiß ab, wäscht mit heißem Ethanol und trocknet. Erhalten werden 32,2 g 2-Anthrachinonylamino(1)-4-(3,4-Phthaloyl-7-brom)acridonylamino(2)-6-chlor-anthrachinon.

Cl-Gehalt : 4,4 %
Br-Gehalt : 10,8 %

c) 18,9 g des nach b) erhaltenen Produktes werden in 220 ml Phenol solange mit 8,6 g 1-Amino-4-benzoylamino-anthrachinon bei 150° verrührt bis nur noch wenig Amin chromatographisch nachweisbar ist (ca. 6 Stunden erforderlich). Man destilliert mit Wasserdampf das Phenol ab, filtriert aus der verbleibenden Suspension den Farbstoff ab und trocknet. Erhalten werden 26,3 g 2-anthrachinonylamino(1)-4-(3,4-phthaloylamino-7-brom)-acridonylamino-(2)-6-(4-benzoylamino)anthrachinonylamino(1)-triazin.

Cl-Gehalt : 0,5 %

Br-Gehalt : 7,6 %

Dieses Produkt färbt — in feinverteilte Form gebracht — Baumwolle aus warmer Küpe in grauem Farbton.

## Beispiel 5

11,3 g des nach Beispiel 2a) erhaltenen Produktes werden mit einer Mischung von 6,2 g 1-Amino-4-Benzoylamino-anthrachinon und 4,1 g 1-Amino-anthrachinon in 120 ml Phenol 3 Stunden auf 145-150° erwärmt. Anschließend wird das Reaktionsgemisch solange mit Wasserdampf destilliert bis alles Phenol abgetrieben ist. Die wäßrige Farbstoffsuspension wird filtriert, mit heißem Wasser gewaschen und getrocknet. Erhalten werden 20,0 g eines schwärzlichen Produktes. Cl-Gehalt 0,5 % ; Brom-Gehalt : 8,5 %. Dieses Produkt färbt in fein verteilte Form gebracht Baumwolle echt in neutral grauem Farbton.

## Beispiel 6

a) Eine Mischung aus 10 g 7-Brom-3,4-phthaloyl-2-amino-acridon, 3,85 g 1-Amino-anthrachinon, 5,8 g 1-Amino-4-benzoylamino-antrachinon, 3,7 g Cyanurchlorid — das entspricht einem molaren Verhältnis der Komponenten von 1,2 : 0,85 : 0,85 : 1 — wird in 120 ml trockenem Phenol 3 Stunden bei 140-142° verrührt anschließend wird das Reaktionsgemisch einer Wasserdampfdestillation unterworfen, aus der verbleibenden Suspension der Farbstoff abfiltriert, gewaschen und getrocknet. Erhalten werden 20,8 g eines schwarzen Pulver, das in fein verteilte Form gebracht Baumwolle in kräftigen neutral grauem Ton färbt.

b) Man arbeitet wie in a) beschrieben setzt aber folgende Mischung ein

10 g 7-Brom-3,4-phthaloyl-2-amino-acridon
3,2 g 1-Amino-anthrachinon
6,8 g 1-Amino-4-benzoylamino-anthrachinon
3,7 g Cyanurchlorid

— das entspricht einem molaren Verhältnis der Komponenten von 1,2 : 0,7 : 1,0 : 1,0 — Erhalten werden 21,3 g = 99 % der Theorie Dieses Produkt färbt Baumwolle in deutlich rotstichig grauem Ton.

c) Man arbeitet wie in a) beschrieben setzt aber folgende Mischung ein

10 g 7-Brom-3,4-phthaloyl-2-amino-acridon
4,6 g 1-Amino-anthrachinon
4,7 g 1-Amino-4-benzoylamino-anthrachinon
3,7 g Cyanurchlorid

— das entspricht einem molaren Verhältnis der Komponenten von 1,2 : 1,0 : 0,7 : 1,0 Erhalten werden 20,5 g = 98 % der Theorie

Dieses Produkt färbt Baumwolle in olivgrauem Ton.

d) Man wiederholt die Versuche a)-c) setzt aber statt 1-Amino-anthrachinon eine gleich große Menge rohes 1-Amino-anthrachinon ein, welches folgende analytische Zusammensetzung hat ;

72,5 % 1-Amino-anthrachinon
5,9 % 2-Amino-anthrachinon
3,1 % 1,5 Diamino-anthrachinon
3,0 % 1,6 Diamino-anthrachinon
3,1 % 1,7-Diamino-anthrachinon
2,8 % 1,8-Diamino-anthrachinon
2,3 % Anthrachinon

und nach Beispiel 1 der DE-OS 2 749 889 erhalten wurde. Man erhält in vergleichbaren Ausbeuten Produkte, die in fein verteilte Form gebracht — Baumwolle ebenfalls kräftig färben.

e) Man arbeitet wie in a) beschrieben setzt aber folgende Mischung ein

11,7 g 7-Brom-3,4-phthaloyl-2-amino-acridon
3,4 g 1-Amino-anthrachinon
5,1 g 1-Amino-4-benzoylamino-anthrachinon
3,7 g Cyanurchlorid

— das entspricht einem molaren Verhältnis von 1,4 : 0,75 : 0,75 : 1 —
Erhalten werden 21,9 g = 100 % der Theorie Dieses Produkt färbt Baumwolle in stark blaustichig grauem Ton.

Beispiel 7

a) 22,0 g 1-Amino-anthrachinon werden in 200 ml Phenol und 19 g Cyanurchlorid solange bei 60-65° verrührt bis chromatographisch nur noch eine Spur Amin nachweisbar ist (ca. 5-6 Stunden erforderlich). Man verdünnt mit 200 ml Aceton, saugt bei 40-50° ab, wäscht mit Aceton und trocknet. Erhalten werden 30,3 g 2-Anthrachinonylamino(1)-4,6-dichlor-triazin. Chlorgehalt : 17,7 %.

b) 18,6 g des nach a) erhaltenen Produktes (= 0,05 Mol) werden mit 33,5 g 2-Amino-3,4-phthaloylacridon (0,1 Mol) solange bei 145-150° verrührt bis chromatographisch nur noch geringe Reste an Amin nachweisbar sind. Das Produkt wird anschließend im Vakuumschrank vom Phenol befreit, mit heißem Wasser ausgerührt, filtriert und getrocknet. Erhalten werden 48,5 g Farbstoff. Cl-Gehalt : 0,4 %. Er färbt Baumwolle in stark blaustichig olivgrauem Ton.

Beispiel 8

a) 40,9 g (= 0,1 Mol) 5,7-Dichlor-3,4-phthaloyl-2-amino-acridon werden mit 18,4 g Cyanurchlorid (= 0,1 Mol) in 400 ml Nitrobenzol 1 Stunde lang bei 130° verrührt, rührt kalt, saugt ab, wäscht nacheinander mit Nitrobenzol und kaltem Methanol und trocknet im Vakuum bei Raumtemperatur. Erhalten werden 47,4 g ; Chlorgehalt = 23,4 %.

b) 10 g des nach a) erhaltenen Produktes werden mit 8 g 2-Amino-anthrachinon in 150 ml Phenol 1 Stunde bei 110° und 1 Stunde bei 150° verrührt. Man verdünnt anschließend mit 150 ml Pyridin, saugt bei 100° ab, wäscht mit Pyridin und Methanol und trocknet. Erhalten werden 14,6 g ; Cl-Gehalt 8,8 %. Baumwolle wird in olivstichig grünen Tönen gefärbt.

Beispiel 9

13,6 g 2-Amino-3,4-phthaloyl-7-brom-acridon werden in 175 ml Nitrobenzol bei 110° mit 6 g Cyanurchlorid versetzt und 2 Stunden bei 130° verrührt. (Halogengehalt aufgearbeiteter Probe : 11,5 % Cl ; 14,0 % Brom). Nun gibt man 12,5 g 1-Amino-anthrachinon und 150 ml Phenol zu und erwärmt auf 150° und hält bei dieser Temperatur 5 Stunden lang. Nun entfernt man die Lösungsmittel durch Destillation im Vakuum, kocht den Rückstand mit heißem Wasser aus und trocknet. Erhalten werden 24,5 g ; Chlorgehalt 0,5 % ; Bromgehalt 8,8 %.

Beispiel 10

Man arbeitet wie in Beispiel 6a beschrieben, setzt aber statt 1-Amino-anthrachinon eine gleich große Menge 2-Amino-anthrachinon ein. Nach gleichartiger Aufarbeitung erhält man 21,4 g Farbstoff ; Cl-Gehalt : 0,6 %, Bromgehalt : 9,1 %. Der Farbstoff färbt Baumwolle aus der Küpe bei 50-55 °C in grauem Ton.

Beispiel 11

11,3 g 2-(3.4-Phthaloyl-7-brom)acridonylamino(2)-4,6-dichlortriazin — erhalten nach Beispiel 2a — werden mit 4 g 1-Amino-anthrachinon und 6,1 g 1-Amino-5-benzoylamino-anthrachinon in 160 ml Phenol 3 Stunden lang bei 150 °C verrührt. Anschließend wird das Phenol mit Wasserdampf abgetrieben, der Farbstoff abfiltriert, gewaschen und getrocknet. Erhalten werden 19 g. Cl-Gehalt : 0,8 %, Bromgehalt : 8,0 %.
In fein verteile Form gebracht färbt das Produkt Baumwolle aus der Küpe in kräftigem braunstichig olivgrünem Ton.

Beispiel 12

Eine Mischung aus

50,3 g-2-Amino-3,4-phthaloyl-7-brom-acridon
17,1 g 1-Amino-4-benzoylamino-anthrachinon
27,4 g eines Amino-anthrachinongemisches folgender Zusammensetzung :

| | |
|---|---|
| 1-Amino-anthrachinon : | 40,1 % |
| 2-Amino-anthrachinon : | 22,5 % |
| 1,5-Diamino-anthrachinon : | 2,8 % |
| 1,8-Diamino-anthrachinon : | 5,8 % |
| 1,6-Dimino-anthrachinon : | 3,6 % |
| 1,7-Dimino-anthrachinon : | 3,9 % |
| Anthrachinon : | 12,4 % |

(erhalten durch NaSH-Reduktion eines aus der Mutterlauge der 1-Nitro-anthrachinonreinigung gemäß dem Verfahren der DE-OS 2 343 977/78 isolierten Nitro-anthrachinongemisches ; Rest auf 100 % unbekannt) wird in 600 ml Phenol bei 60 °C mit 18,5 g Cyanchlorid versetzt. Innerhalb von 2 Stunden wird auf 140 °C unter Rühren gleichmäßig schnell erwärmt. Man rührt ca. 2 Stunden bei dieser Temperatur nach bis chromatographisch nur noch spurenweise 2-Amino-3,4-phthaloyl-7-bromacridon und 1-Amino-4-benzoylamino-anthrachinon nachweisbar sind. Man treibt das Phenol mit Wasserdampf ab, saugt die entstandene Suspension ab und wäscht sie mit heißem Wasser säurefrei. Erhalten werden 154 g Preßkuchen, enthaltend 99,6 g Farbstoff (98 % d. Th.) Chlorgehalt : 0,6 % ; Bromgehalt : 9,0 %.

7,74 g des Preßkuchens (enthaltend 5 g Farbstoff) werden mit 10 g eines üblichen Dispergiermittels versetzt und mit Wasser auf 100 g aufgefüllt. Die erhaltene Dispersion wird 12 Stunden in einer Kugelmühle gemahlen.

Mit der erhaltenen ca. 5-%igen Farbstoffpaste wird Baumwolle aus 50-55 °C warmer Küpe in kräftigem olivgrauem Ton gefärbt.

**Patentansprüche**

1. Küpenfarbstoffe der Formel

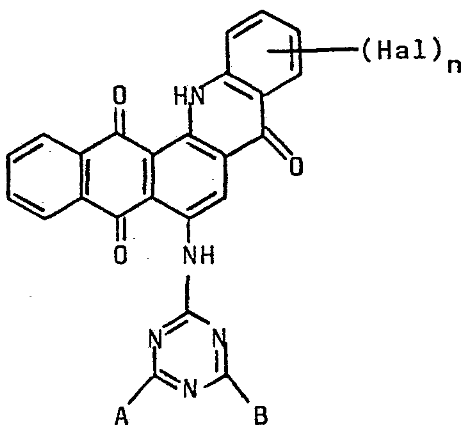

(I)

in der

A für —NHV, —NHW oder —NHZ und
B für —NHW oder —NHZ stehen, wobei
V einen Rest der Formel

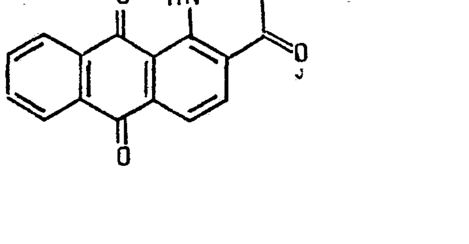

W einen Rest der Formel

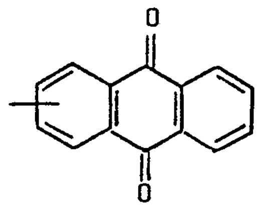

und

Z einen Rest der Formel

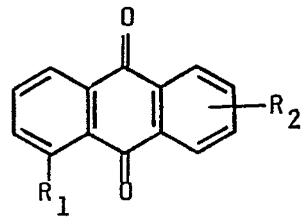

darstellen,

$R_1$ und $R_2$ Wasserstoff oder Acylamino, jedoch nicht gleichzeitig Acylamino,

Hal ein Halogenatom und

n die Zahlen 0, 1 oder 2

bedeuten.

2. Küpenfarbstoffe gemäß Anspruch 1, enthaltend als Farbstoffkomponente eine Mischung von Verbindungen der Formel

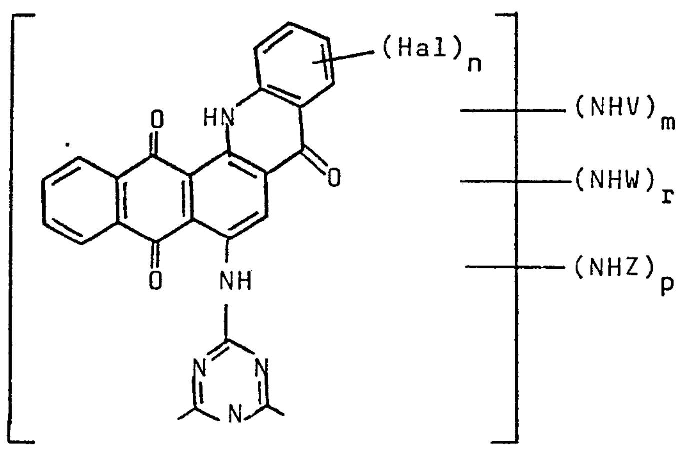

(II)

worin die diversen Reste die in Anspruch 1 genannte Bedeutung haben und

m für eine Zahl von 0 bis 0,5 und

r und p unabhängig voneinander für eine Zahl von 0,5 bis 1,5 stehen,

wobei die Summe $m + r + p = 2$ ist.

3. Küpenfarbstoffe gemäß Anspruch 2, dadurch gekennzeichnet, daß $p = 0$, $m = 0$ bis 0,2 und $r = 1{,}8$-2,0 ist, wobei $m + r = 2$.

4. Küpenfarbstoffe gemäß Anspruch 1 oder 2, dadurch gekennzeichnet, daß

Hal für Brom, $R_1$ für $C_1$-$C_4$-Alkylcarbonylamino oder gegebenenfalls durch Cl, Br, $C_1$, Br, $C_1$-$C_4$-Alkyl, $OCH_3$, $CF_3$ oder $NO_2$ substituiertes Benzoylamino und

n für 0 oder 1 stehen.

5. Verfahren zur Herstellung von Küpenfarbstoffen gemäß Anspruch 1, dadurch gekennzeichnet, daß man 1 Äquivalent Cyanurchlorid mit mindestens 1 Äquivalent eines Amins der Formel $NH_2$-V und maximal 2 Äquivalenten der Amine $NH_2$-W und/oder $NH_2$-Z in beliebiger Reihenfolge nach an sich bekannten Methoden bis zum praktisch vollständigen Chloraustausch umsetzt.

6. Verfahren nach Anspruch 5, dadurch gekennzeichnet, daß man 1 Äquivalent Cyanurchlorid mit insgesamt 2,7 bis 3,0 Äquivalenten eines Gemisches der Amine V-$NH_2$, W-$NH_2$ und gegebenenfalls Z-$NH_2$, wobei das Amin V-$NH_2$ mit mindestens 1 Mol vertreten sein muß, in Gegenwart von aromatischen Oxyverbindungen stufenweise bis zum praktisch vollständigen Chloraustausch umsetzt.

7. Verfahren nach Anspruch 6, dadurch gekennzeichnet, daß man als Oxyverbindung Phenol einsetzt.

8. Verfahren gemäß Ansprüche 5 bis 7, dadurch gekennzeichnet, daß man in einem « Eintopfverfahren» die Umsetzung zunächst bei 70-110 °C bis zum erfolgten Mono- bzw. Dichloraustausch durchführt und dann bei 120-150 °C zu Ende führt.

9. Verfahren nach Ansprüchen 5-9, dadurch gekennzeichnet, daß man als Amine der Formel $NH_2$-W solche einsetzt, die durch Reduktion der Roh- oder Abfallprodukte, vorzugsweise der technischen Anthrachinonmononitrierung erhalten werden.

10. Verfahren nach Ansprüchen 5-9, dadurch gekennzeichnet, daß man als Amine der Formel $NH_2$-Z solche einsetzt, die durch Reduktion von Dinitro-anthrachinongemischen und anschließende Monoacylierung erhalten werden.

**Claims**

1. Vat dyestuffs of the formula

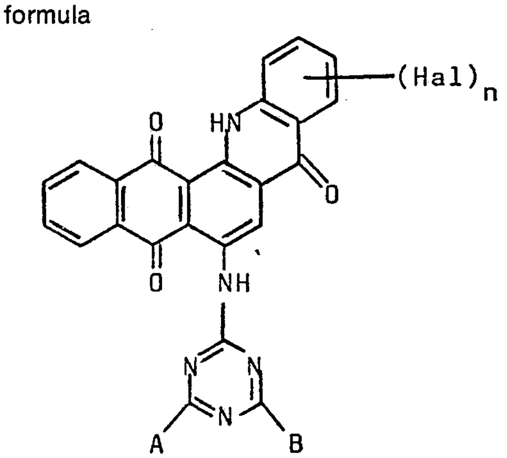

(I)

in which

A represents —NHV, —NHW or —NHZ and
B represents —NHW or —NHZ, wherein
V represents a radical of the formula

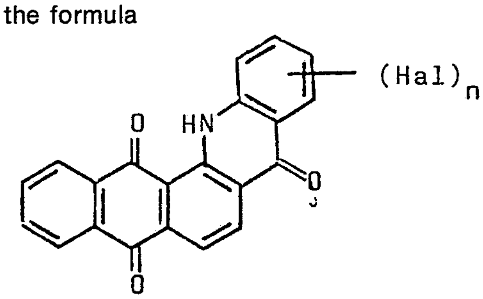

W represents a radical of the formula

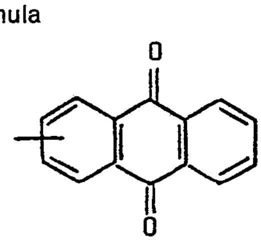

and

Z represents a radical of the formula

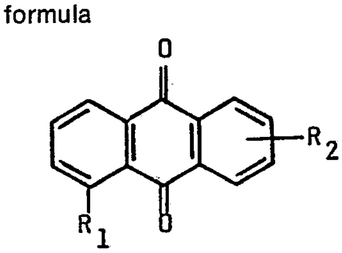

$R_1$ and $R_2$ denote hydrogen or acylamino, but not simultaneously acylamino,
Hal denotes a halogen atom and
n denotes the numbers 0, 1 or 2.

2. Vat dyestuffs according to Claim 1, containing as the dyestuff component a mixture of compounds of the formula

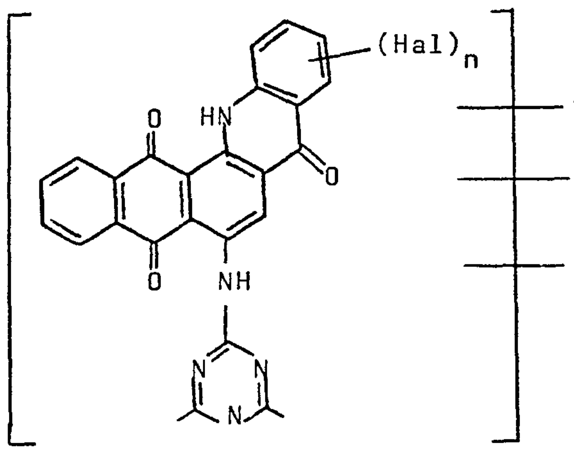

(II)

wherein the various radicals have the meaning mentioned in Claim 1 and

m represents a number from 0 to 0.5 and

r and p independently of one another represent a number from 0.5 to 1.5,

the sum of m + r + p being 2.

3. Vat dyestuffs according to Claim 2, characterised in that p is 0, m is 0 to 0.2 and r is 1.8-2.0, m + r being 2.

4. Vat dyestuffs according to Claim 1 or 2, characterised in that

Hal represents bromine, $R_1$ represents $C_1$-$C_4$-alkylcarbonylamino or benzoylamino which is optionally substituted by Cl, Br, $C_1$, Br, $C_1$-$C_4$-alkyl, $OCH_3$, $CF_3$ or $NO_2$, and

n represents 0 or 1.

5. Process for the preparation of vat dyestuffs according to Claim 1, characterised in that 1 equivalent of cyanuric chloride is reacted with at least 1 equivalent of an amine of the formula $NH_2$-V and at most 2 equivalents of the amines $NH_2$-W and/or $NH_2$-Z in optional sequence, by methods which are in themselves known, until chlorine replacement is virtually complete.

6. Process according to Claim 5, characterised in that 1 equivalent of cyanuric chloride is reacted stepwise with a total of 2.7 to 3.0 equivalents of a mixture of the amines V-$NH_2$, W-$NH_2$ and, if appropriate, Z-$NH_2$, the amine V-$NH_2$ necessarily being present to the extent of at least 1 mol, in the presence of aromatic hydroxy compounds, until the replacement of chlorine is virtually complete.

7. Process according to Claim 6, characterised in that phenol is used as the hydroxy compound.

8. Process according to Claims 5 to 7, characterised in that in a « one-vessel process » the reaction is initially carried out at 70-110 °C until monochloro or dichloro replacement has been effected and is then completed at 120-150 °C.

9. Process according to Claims 5-9, characterised in that the amines used are those of the formula $NH_2$-W which are obtained by reducing the crude or waste products of, preferably, the industrial mononitration of anthraquinone.

10. Process according to Claims 5-9, characterised in that the amines used are those of the formula $NH_2$-Z which are obtained by reduction of dinitroanthraquinone mixtures and subsequent monoacylation.

**Revendications**

1. Colorants pour cuve de formule

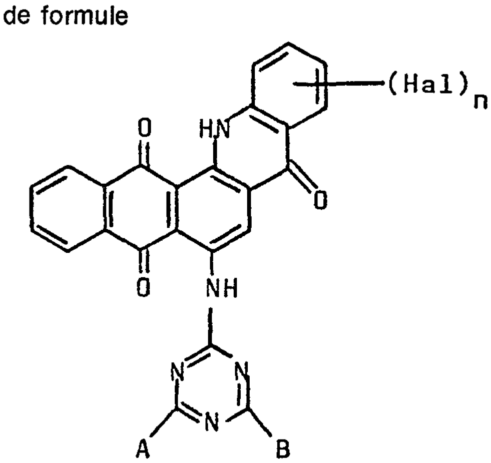

(I)

dans laquelle

A représente —NHV, —NHW ou —NHZ et

B représente —NHW ou —NHZ,

V est un reste de formule

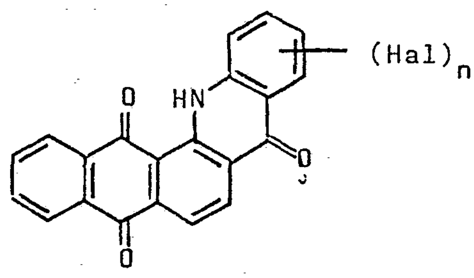

W est un reste de formule

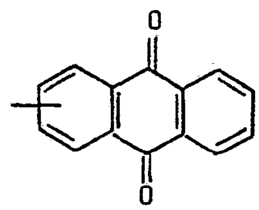

et

Z est un reste de formule

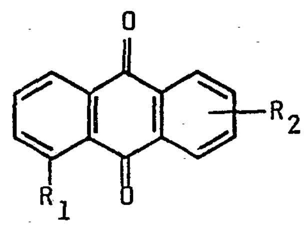

$R_1$ et $R_2$ représentent l'hydrogène ou un groupe acylamino, mais ne sont pas en même temps un groupe acylamino,

Hal est un atome d'halogène et

n représente les nombres 0, 1 ou 2.

2. Colorants pour cuve suivant la revendication 1, contenant comme composant tinctorial un mélange de composés de formule

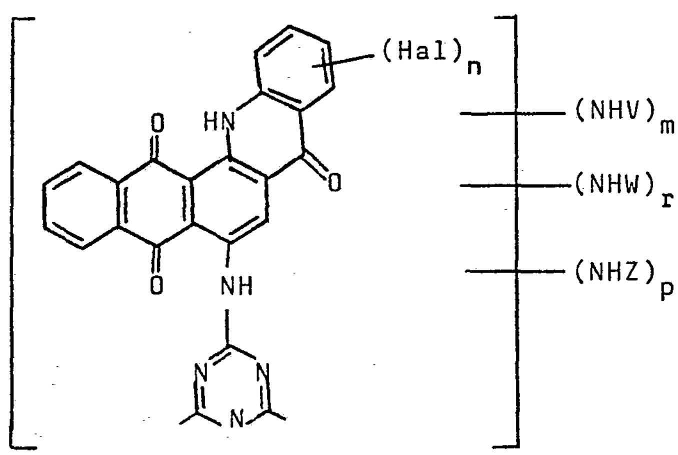

(II)

dans laquelle les divers restes ont la définition donnée dans la revendication 1

m représente un nombre de 0 à 0,5 et

r et p représentent indépendamment l'un de l'autre un nombre de 0,5 à 1,5,

la somme m + r + p étant égale à 2.

3. Colorants pour cuve suivant la revendication 2, caractérisés en ce que p est égal à 0, m a une valeur de 0 à 0,2 et r a une valeur de 1,8 à 2,0, la somme m + r étant égale à 2.

4. Colorants pour cuve suivant la revendication 1 ou 2, caractérisés en ce que
Hal représente le brome, $R_1$ est un groupe (alkyle en $C_1$ à $C_4$) carbonylamino ou un groupe benzoylamino éventuellement substitué par un radical Cl, Br, $C_1$, Br, alkyle en $C_1$ à $C_4$, $OCH_3$, $CF_3$ ou $NO_2$ et
n a la valeur 0 ou 1.

5. Procédé de production de colorants pour cuve suivant la revendication 1, caractérisé en ce qu'on fait réagir un équivalent de chlorure de cyanuryle avec au moins 1 équivalent d'une amine de formule $NH_2$-V et au maximum 2 équivalents des amines $NH_2$-W et/ou $NH_2$-Z dans un ordre quelconque selon des opérations connues jusqu'à ce que l'échange de chlore soit pratiquement total.

6. Procédé suivant la revendication 5, caractérisé en ce qu'on fait réagir un équivalent de chlorure de cyanuryle avec au total 2,7 à 3,0 équivalents d'un mélange des amines V-$NH_2$, W-$NH_2$ et le cas échéant Z-$NH_2$, l'amine V-$NH_2$ devant être représentée par au moins une mole, en présence de composés oxy-aromatiques, progressivement jusqu'à échange pratiquement total du chlore.

7. Procédé suivant la revendication 6, caractérisé en ce qu'on utilise le phénol comme composé oxy.

8. Procédé suivant les revendications 5 à 7, caractérisé en ce qu'on conduit la réaction selon un « procédé en un seul récipient » tout d'abord à 70-110 °C jusqu'à ce que l'échange d'un et de deux atomes de chlore soit effectué, puis on l'achève à 120-150 °C.

9. Procédé suivant les revendications 5-9, caractérisé en ce qu'on utilise comme amines de formule $NH_2$-W celles que l'on obtient par réduction des produits bruts ou résiduels, de préférence de la mononitration industrielle de l'anthraquinone.

10. Procédé suivant les revendications 5-9, caractérisé en ce qu'on utilise comme amines de formule $NH_2$-Z des amines qui sont obtenues par réduction de mélanges de dinitro-anthraquinones, suivie d'une monoacylation.